# EUROPEAN PATENT APPLICATION

(11) **EP 4 734 385 A2**
(43) Date of publication of application: **29.04.2026**
(21) Application number: 25209947.8
(22) Date of filing: 21.10.2025
(51) Int. Cl.: H04B 7/04

(54) **CODEBOOK DESIGN AND BEAM STEERING PROTOCOL FOR A RECONFIGURABLE INTELLIGENT SURFACE**

(30) Priority: 23.10.2024 US 202418924022
(71) Applicant: NXP USA, Inc., Austin, TX 78735 (US)
(72) Inventor: CHEN, Ziru, 5656AG Eindhoven (NL); ZHANG, Rong, 5656AG Eindhoven (NL); CAO, Rui, 5656AG Eindhoven (NL); ALAMDAR, Saeid, 5656AG Eindhoven (NL); SAI-WANG, Tam, 5656AG Eindhoven (NL); THÜRINGER, Peter, 5656AG Eindhoven (NL); ZHANG, Hongyuan, 5656AG Eindhoven (NL)
(74) Representative: Hardingham, Christopher Mark

(57) **Abstract**

Methods and apparatus for generating a codebook for a reconfigurable intelligent surface (RIS) having a plurality of reflective elements (RIS elements). In an example, a method includes determining relative location information regarding a transmitter and the RIS and a receiver and the RIS. Based on the relative location information, angle of arrival information is calculated for signals from the transmitter to the RIS elements, and angle of departure information is calculated for signals from the RIS elements to the receiver. Phase shift information for the RIS elements is calculated based on the angle of arrival and angle of departure information, and is used to select reflection coefficients for the RIS elements such that a transmitted signal is reflected from the RIS to the receiver as a coherent reflected beam. The reflection coefficients are stored as a codeword in a RIS codebook used to configure the RIS elements.

## Description

### BACKGROUND OF THE INVENTION

### FIELD OF THE INVENTION

This invention relates generally to wireless communications, and more particularly to configuration of a reconfigurable intelligent surface (RIS).

### DESCRIPTION OF RELATED ART

At certain frequencies, such as those used for cellular communications, wireless signals are prone to reflection or absorption by physical objects such as walls and other barriers. Signal quality can also be negatively impacted by other signals in a shared wireless channel or adjacent channels. Such interference can vary over time and be difficult to predict.

The challenges of the radio channel are most easily addressed through the use of high power data signals at frequencies that have good penetration and range. When this approach is not available, as is the case in many data communication systems, sophisticated transmission and reception schemes are typically employed. For example, base station (BS), access point (AP) and other transmitter locations can be optimized based on radio propagation measurements or simulations. In addition, beam steering, pre-distortion, and other methods can be employed to maintain sufficient data rates through a radio channel.

Beam steering is a technique used to focus a wireless signal towards a specific receiving device, rather than have the signal spread out in all directions as with a broadcast antenna. The resulting wireless connection is generally faster and more reliable than it would be without beam steering. In operation, transmitter beam steering utilizes MIMO (multiple-input multiple-output) technology to broadcast the same signal from multiple antennas at slightly different times. The overlapping waves will produce interference, which can be constructive in some areas (making the signal stronger) and destructive in other areas (making the signal weaker or undetectable). When implemented correctly, beam steering can focus a stronger signal (e.g., the main lobe of a radiation pattern) in a specific direction or towards a specific receiver. One limitation of beam steering is that the benefits tend to diminish the farther away a receiver is from a transmitter.

A reconfigurable intelligent surface (RIS) (sometimes referred to as an intelligent reflect arrays/surface or software-controlled metasurface) is a relatively new technology that may be used to shape or direct all or part of a radio channel so that radio frequency (RF) signals can be received when the radio channel would otherwise fail or be limited to suboptimal data rates. A RIS includes an array of independently controllable elements or surfaces that are used to apply effects to the radio frequency signals (e.g., reflection, refraction, absorption, focusing and polarization). A RIS can also be used to reduce the effect of interference in the radio channel by manipulating radio frequency energy in the radio channel. As compared to a repeater, no additional retransmission delay is added by a RIS and relatively little power is required.

### BRIEF DESCRIPTION OF THE DRAWINGS

One or more embodiments will now be described by way of example only with reference to the accompanying drawings, in which:
Figure 1 illustrates an example of a wireless network that includes a reconfigurable intelligent surface (RIS) implemented in accordance with various embodiments of the present disclosure;
Figure 2 illustrates an example of a RIS including RFID elements in accordance with embodiments of the present disclosure;
Figure 3 is a schematic block diagram of an example of an RFID element of a RIS in accordance with an embodiment of the present disclosure;
Figure 4 is a schematic block diagram of another example of an RFID element of a RIS in accordance with an embodiment of the present disclosure;
Figure 5 illustrates a coordinate system that can be utilized in calculating angle of arrival and angle of arrival information in accordance with embodiments of the present disclosure;
Figure 6 illustrates a RIS-steered signal in accordance with embodiments of the present disclosure;
Figure 7 is a logic diagram illustrating RIS codebook design for known transmitter and receiver locations in accordance with an embodiment of the present disclosure;
Figure 8 illustrates selection of nominal receiver locations in accordance with embodiments of the present disclosure;
Figure 9 is a logic diagram illustrating coarse codebook design for an unknown receiver location in accordance with an embodiment of the present disclosure;
Figure 10 is a logic diagram illustrating fine codebook design for an unknown receiver location in accordance with an embodiment of the present disclosure;
Figure 11 is a logic diagram illustrating selection of an optimal codeword of a codebook through use of receiver feedback in accordance with an embodiment of the present disclosure;
Figure 12 illustrates selection of nominal transmitter and nominal receiver locations in accordance with embodiments of the present disclosure;
Figure 13 is a logic diagram illustrating codebook design for unknown transmitter and receiver locations in accordance with an embodiment of the present disclosure;
Figure 14 illustrates a flow diagram for refining a predetermined codebook in accordance with embodiments of the present disclosure;
Figure 15 is a logic diagram illustrating selection of an optimal codeword of a predetermined codebook in accordance with an embodiment of the present disclosure;
Figure 16 is a logic diagram illustrating use of compiled receiver feedback to design a codebook in accordance with an embodiment of the present disclosure;
Figure 17 is a logic diagram illustrating use of machine learning to select a next codeword of a codebook in accordance with an embodiment of the present disclosure; and
Figure 18 is a schematic block diagram of an example of a wireless transmitter according to an embodiment of the present disclosure.

### DETAILED DESCRIPTION

A reconfigurable intelligent surface (RIS) is a programmable surface structure that may be used to control the reflection of electromagnetic (EM) waves by changing the electric and magnetic properties of the surface. Such surfaces may be strategically placed in a radio channel between a transmitter and one or more receivers (or between transceivers).

The RIS is composed of an array of reflecting elements (also referred to herein as "RIS elements"), each of which is capable of independently imposing a phase shift on an incident signal. The reflective properties of the RIS elements can be configured using values (or "reflection coefficients") stored in a RIS codebook to steer an RF electromagnetic wave or signal in a desired direction ("RIS beam steering"), such as towards a receiver location in order to improve coverage and link quality in a low-cost manner. In a non-limiting example, the RIS elements are variable impedance passive reflecting elements, and the reflection coefficients of a RIS codebook control the impedances (i.e., phase shift settings) of the variable impedance elements.

Existing solutions for RIS codebook design and beam steering require accurate/statistical channel state information (CSI). However, obtaining useful channel state information for a wireless channel involving a RIS is highly complex, if not virtually impossible in certain circumstances. This is due in part to the large number and passive nature of the RIS elements, and the inability of a RIS to generate channel state information using traditional channel state estimation strategies based on pilot transmissions. Such limitations have hindered widespread usage of RIS technology in wireless communication systems.

Various methods and device architectures are described herein for generating codebooks for a RIS without requiring knowledge of (statistical) wireless channel state information. Such methods include geometry-based solutions, sounding-based solutions, and data driven machine learning based solutions. In general, the design target for a RIS codebook described herein is to coherently combine the signal paths from a transmitter to the RIS elements, and coherently steer the combined signal paths from the RIS elements towards a receiver. In an example of a geometry-based method according to an embodiment of the present disclosure, relative location information for a transmitter, a receiver, and reflective elements of a RIS are used to calculate signal path angle of arrival information and angle of departure information for the RIS elements. Using this information, estimated phase shift information for each RIS element is calculated, and corresponding reflection coefficients are selected to meet the design target of the codebook. The selected reflection coefficients are stored in a RIS codebook for use in configuring the RIS elements.

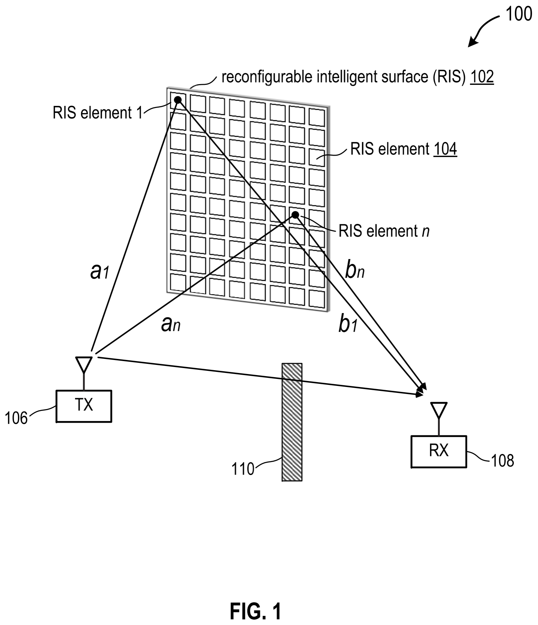

Referring more specifically to Figure 1, an example of a wireless network is illustrated in which various methods and apparatus described herein may be implemented. The illustrated network 100 includes a reconfigurable intelligent surface (RIS) 102 having a plurality of RIS elements 104, a transmitter 106, and a receiver 108. In this example, an obstacle 110 is in the line-of-sight (LOS) between the transmitter 106 and the receiver 108, and may significantly impede or attenuate signal strength in the LOS signal path from the transmitter 106 to the receiver 108. Obstacle 110 may include walls, buildings and other physical barriers, interference from other electronic devices operation on similar frequencies, and other obstacles that impact the signal quality and reliability of a wireless channel.

In such scenarios, the RIS 102 can improve communications by establishing another signal path between the transmitter 106 and receiver 108. In the illustrated example, RIS 102 is configured (e.g., with phase settings/reflection coefficients from a codebook designed in accordance with embodiments of the present disclosure) to form a reflection beam in the direction of the antenna of the receiver 108, thereby enhancing signal quality and data throughput. In the illustrated example, a signal from the transmitter 106 is received at differing angles of arrival by each of the RIS elements 104, and reflected (or steered) towards a receiver 108 at differing angles of departure. For example, the transmitted signal arrives at RIS element 1 as signal al and is steered towards the receiver 108 as signal b1, while the signal arrives at RIS element n as signal an and is reflected as signal bn. As described more fully below, a RIS codebook may include a plurality of codewords, each of which includes a set reflection coefficients corresponding to a RIS steered beam.

In an example, the RIS 102 is composed of an array of 2.4 GHz aperture-coupled stacked patch antennas (RIS elements 104) that captures incoming EM wave power and converts the captured power into guided waves through transmission delay lines. In this example, the reradiated EM waves are manipulated in phase at each RIS element 104 using a switch, such as a single pole four throw (SP4T) switch, and a plurality of switchable delay lines. The switchable delay lines control the phase of the reflected EM wave at a RIS element 104, which allows the EM wave to be directed, e.g. for beam steering.

While the RIS 102 is generally described in the context of Wi-Fi communications, it may be applied to other signal types, modulation schemes, and protocols including Bluetooth, ultra-wideband, cellular, and private band data communications, inter alia. In addition, the concepts described herein can be utilized to generate codebooks and beam steering protocols for many different types and sizes of reconfigurable intelligent surfaces beyond the embodiments described herein. Further, receiver 108 may be any type of device (e.g., a cellular device, a mobile computing device, a mesh networking device, a sensor or actuator device, etc.) that includes wireless receiver/transmitter circuity capable of communicating with the transmitter 106 in a relevant frequency band.

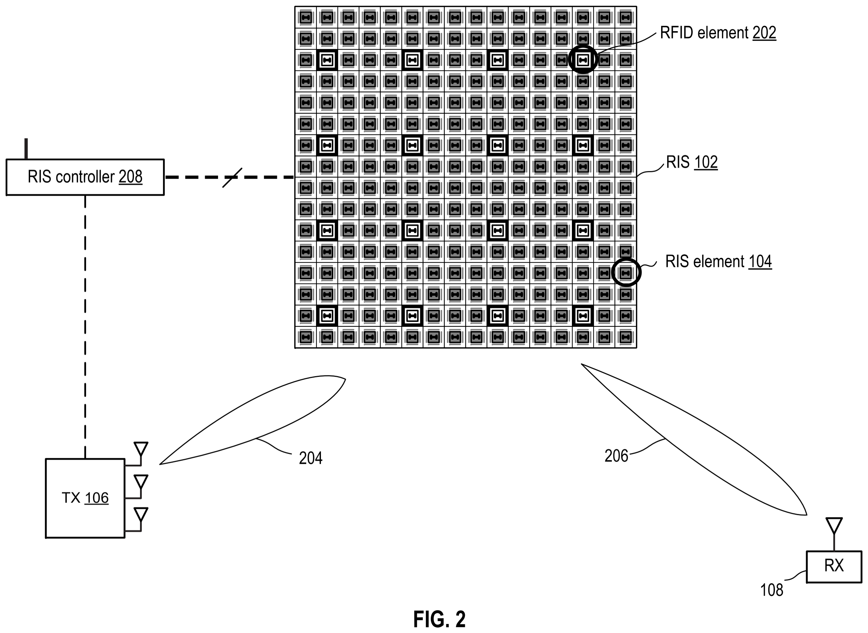

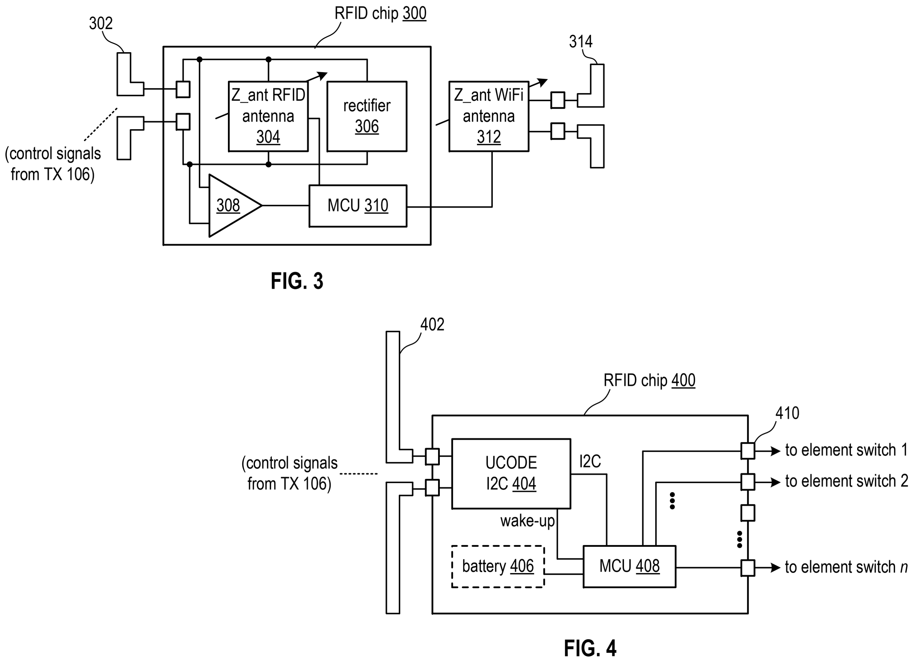

Figure 2 illustrates an example of a RIS 102 including RFID elements 202 in accordance with embodiments of the present disclosure. In the illustrated example, a transmitter 106 having multiple antennas directs a transmitted beam 204 towards the RIS 102. The array(s) of RIS elements 104 and array of RFID elements 202 are configured with respective reflection coefficients to steer the transmitted beam towards a receiver 108 as (a coherent) RIS beam 206. Each of the RFID elements 202 include an RFID chip for receiving control signals as described more fully below with reference to the examples of Figure 3 and Figure 4. Control signals (e.g., from the transmitter 106) can include different types of information depending on the control architecture of the RIS 102. For example, configuring RIS elements 104 with desired codebook values can include communicating angle of reflection or phase values, RIS element settings based on one or more lookup tables stored in the RIS 102, specific impedance values, etc.

Various RIS architectures may be used in conjunction with the disclosed methodologies for generating RIS codebooks. In one example, each of the RIS elements (e.g., the RFID element 202 of Figure 3)) can independently receive control signals from a transmitter 106. The entire RIS may be formed of such elements.

In another example, such as the RIS 102 of Figure 2, a plurality of RFID elements is distributed throughout the RIS. Each of the RFID elements (e.g., the RFID element 202 of Figure 4) controls the configuration of a grouping or block of RIS elements 104. For example, an RFID element can receive control signals for a 4x4 block of RIS elements, and independently configure impedances in each of the RIS elements. Continuing with this example, the RFID element may control larger groupings or arrays of RIS elements, e.g., 16x16, 40x40, 16x24, 8x40, etc. The arrays can be manufactured in separate blocks such that the size of a RIS 102 is readily scalable to improve range and throughput in various deployment scenarios utilizing a variety of protocols such as Wi-Fi, cellular, ultra-wideband (UWB), etc. In addition, differing groupings of the RIS elements 104 can be used for beam towards separate receivers 108 (not separately illustrated).

In a further example of a RIS architecture, a RIS controller 208 is utilized to control all of the RIS elements 104 of a RIS 102. In this example, the RIS controller 208 may have a wired or wireless control connections with each of the RIS elements 104. The RIS controller 208 may receive configuration information, including codebook values, from the transmitter 106 and relay the configuration information to the RIS 102. In a further example, the RIS controller 208 includes switches for selectively configuring passive antenna elements to one of a plurality of impedance values. Further, the RIS controller 208 may provide power to the RIS elements 104. Communications between the transmitter 106 and RIS controller 208 may use RFID with Amplitude Shift Keying (ASK), Bluetooth, IEEE 802.15.4, etc.

Figure 3 is a schematic block diagram of an example of an RFID element 202 of a scalable RIS in accordance with an embodiment of the present disclosure. In this example, the RFID element 202 includes an RFID chip 300 having an RFID antenna variable impedance 304, a rectifier 306, an envelope detector 308, and a microcontroller unit (MCU) 310. The RFID chip 300 is coupled to an RFID antenna 302 and a Wi-Fi antenna variable impedance 312. The Wi-Fi antenna variable impedance 312 establishes an impedance for a RIS element antenna 314. Once the impedance value for the Wi-Fi antenna variable impedance 312 is set for all of the elements of the RIS 102, the transmitter 106 may send signals that will be reflected off of the RIS 102 towards a desired receiver 108.

The RFID antenna 302 receives RFID control signals (e.g., from transmitter 106 or an external RIS controller) that provide power to the RFID chip 300 and data that is used to set the value for the Wi-Fi antenna variable impedance 312. In operation, an RFID antenna variable impedance 304 is set to create a resonate circuit with the RFID antenna 302 to maximize power harvesting. The control signals are fed to the rectifier 306, which rectifies the input signal and produces power. This power may then be applied to the envelope detector 308 and MCU 310 to turn on the envelope detector 308 and MCU 310. The envelope detector 308 detects the envelope of the received control signals, where the envelope of a control signal carries modulated information. The envelope detector 308 provides a data stream, carried by the RFID signal, to the MCU 310. The received data may include control information regarding the direction that the RFID chip 300 should form the RIS beam 206. This control information can then be used to control a Wi-Fi antenna variable impedance 312 to set an impedance value that will aid in steering and forming the RIS beam 206 as a coherent reflected beam.

The RIS element antenna 314 may be a wideband antenna that covers the frequency range of the signal to be reflected. For Wi-Fi, this may be from 2.4 GHz to 7GHz. For other communication protocols, the bandwidth would be set to accommodate the relevant frequencies. Further, a 915 MHz RFID signal using Amplitude Shift Keying (ASK) may be used for control signaling. Other transmission frequencies or standards (e.g., IEEE 802.15.4) may be used for the RFID control signals based upon power harvesting needs, etc.

The RFID chip 300 may use a lookup table that maps an angle of the RIS beam 206 (e.g., corresponding to the reflection coefficients of a RIS codebook or codeword) to a specific impedance value that may be produced by the Wi-Fi antenna variable impedance 312. Table 1 below illustrates an example of a lookup table for an angular resolution of 45°.

**Table 1**

| Angle | Z_Ant Wi-Fi (Ω) |
|---|---|
| 0 | 150 |
| 45 | 69.1+65.1i |
| 90 | 30 + 40.0i |
| 135 | 19.16+18.06i |
| 180 | 16.67+0i |
| 225 | 19.16-18.0651i |
| 270 | 30-40i |
| 315 | 69.1-65i |

In the example of Table 1, three-bit values may be used to select among the eight different impedance values. While 45° increments are shown for Table 1, larger or smaller increments may be selected depending on the configurability of the Wi-Fi antenna impedance 312.

Figure 4 is a schematic block diagram of another example of an RFID element 202 of a scalable RIS. In this example, the RFID element 202 controls a set or block (e.g., a 4x4 block) of RIS elements via control signals from a transmitter 106, and may further provide power for the RIS elements through power harvesting from the control signals. In the illustrated example, the RFID element 202 includes a UCODE I2C circuit 404, a battery 406, and an MCU 408. The UCODE I2C circuit 404 receives a signal via an RFID antenna 402 and provides it to the MCU 408 using an I2C protocol, and also may harvest power. The MCU 408 operates in a similar manner as MCU 310 described above. The battery 406 provides power or additional power to power the RFID chip 400. This may include powering the MCU 408 and the Wi-Fi antenna variable impedances switches of RIS elements 104 controlled by the RFID chip 400. The MCU 408 determines control signals for each of the associated RIS elements 104 and is connected to element switch connector 410 to provide the control signals to each of the various RIS elements 104.

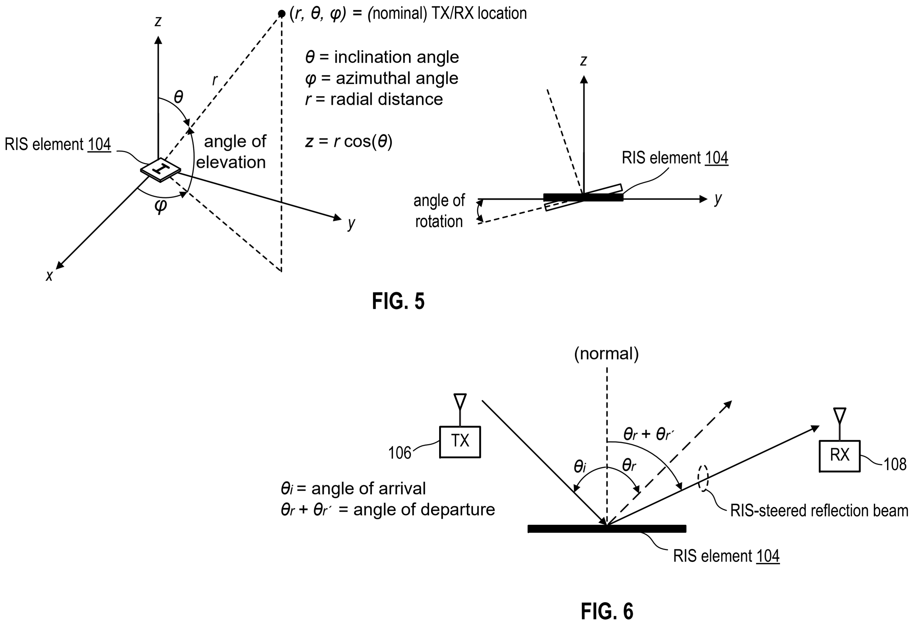

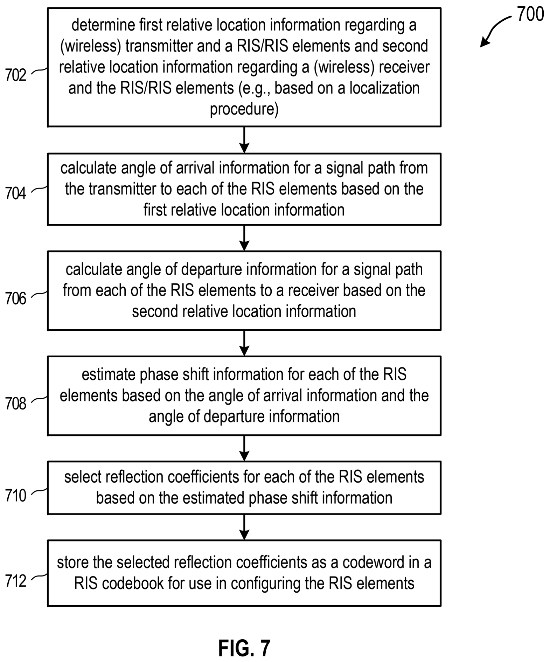

Figure 5 illustrates a spherical coordinate system that can be utilized in the geometry-based methodologies described herein to calculate angle of arrival and angle of departure information for signal paths between a transmitter and a RIS element and between a RIS element and a receiver. As used herein, angle of arrival refers to the direction from which a signal is received by a RIS element, and angle of departure refers to the direction in which the signal is reflected from a RIS element. Examples of geometry-based methodologies for generating RIS codebooks are described in conjunction with Figures 7-13.

The spherical coordinates illustrated in Figure 5 use the physics convention for representing coordinates. Other conventions (e.g., the mathematics convention) may be utilized, as well as other three-dimensional coordinate systems. In the illustrated example, a RIS element 104 is at the origin, and a (known or nominal) location for a transmitter or receiver is at a location (r, *θ, φ*), where r represents a radial distance, *θ* represents an inclination angle, and *φ* represents an azimuthal angle. The inclination angle can be alternatively represented as an angle of elevation with respect to the *x-y* plane. For purposes of determining/adjusting angle of arrival and angle of departure information, relative rotation information for a RIS element 104 is also considered (e.g., in establishing a reference plane), and may be based on a known location and orientation of RIS 102.

Figure 6 illustrates an example of a RIS-steered signal in accordance with embodiments of the present disclosure. In the illustrated example, a signal path from a transmitter 106 to a RIS element 104 has an angle of arrival represented as *θi* with respect to an axis normal to the surface of the RIS element. For a constant impedance or mirrored surface, an incident signal would be reflected or scattered most strongly at an angle of departure of *θr,* where *θi= θr.* In the illustrated example, however, the impedance of the surface of the RIS element is set using one or more reflection coefficients of a RIS codebook to steer or phase shift the reflected beam in the direction of the receiver 108.

In general, the design target for a RIS codebook (or "codebook") described herein is to coherently combine the (LOS) signal paths from a transmitter to the RIS elements of a RIS, and coherently steer the combined signal paths from the RIS elements towards a receiver. In an example of a geometry-based method according to an embodiment of the present disclosure, relative location information for a transmitter, RIS/RIS elements, and a receiver are used to calculate signal path angle of arrival information and angle of departure information for the RIS elements. Using this information, estimated phase shift information for each RIS element is calculated and corresponding reflection coefficients are selected to meet the design target of the codebook.

Figures 7-13 illustrate geometry-based methodologies for generating RIS codebooks and beam steering protocols. The methodologies can be performed by a transmitter 106. Alternatively, various of the methods can be performed by one or more of a transmitter 106 (e.g., a Wi-Fi access point or cellular base station), a centralized network infrastructure, a base station controller, a remote or local computing device or module, a cloud computing device, etc. For purposes of description, the methods are described as being performed by a transmitter. In addition, the location of a RIS is assumed to be known and can be used as an origin point in determining relative location information.

Figure 7 is a logic diagram 700 illustrating RIS codebook (or "codebook") design for known transmitter and receiver locations in accordance with an embodiment of the present disclosure. The method begins at step 702 where a transmitter 106 determines first relative location information regarding the transmitter and RIS elements of a RIS, and second relative location information regarding a wireless receiver and the RIS elements.

Determining relative location information includes using geometrical information, such as relative azimuth, elevation and rotation information as described with reference to Figure 6 and Figure 7. In an example, relative location information can be determined with reference to elements of a RIS. In addition, the relative/known locations of the transmitter, RIS and receiver can be determined in various manners. In one example, ranging measurements (e.g., using RSSI information, Wi-Fi round-trip time (RTT) ranging, signal angle of arrival (AOA) information, signal time of arrival (TOA) information, etc.) can be performed between a transmitter and other nodes of a network to determine an existing location of the transmitter and/or receiver. Range-based localization can utilize various algorithms such as trilateration, triangulation, or multilateration. In another example, the relative location information can be first determined based on a known reference location (e.g., a center point) of a RIS, and a known configuration (e.g., size and/or spacing) of the RIS elements can be used to further calculate relative location information for each of the RIS elements. In this example, a known configuration of the RIS elements can be further utilized to calculate signal path angle of arrival information and angle of departure information for the RIS elements in the following steps. In yet another example, the relative location information can be based on estimated locations for a (nominal) transmitter and a (nominal) receiver.

The method continues at step 704, where angle of arrival information for a signal path the transmitter to each of the RIS elements is calculated based on the first relative location information. Angle of departure information is also calculated (step 706) for a signal path from each of the RIS elements to a receiver based on the second relative location information. The method proceeds to step 708, where phase shift information (e.g., a phase shift required to coherently steer a signal in the direction of the receiver) is estimated for each of the RIS elements based on the angle of arrival information and the angle of departure information. Reflection coefficients for each of the RIS elements are selected based on the estimated phase shift information at step 710. For example, the reflection coefficient(s) for a particular RIS element are selected to shift the phase of a signal from the transmitter such that the reflected signal is steered towards the receiver as part of a coherent reflected beam. The method proceeds to step 712, where the selected reflection coefficients are stored (e.g., in memory of the transmitter) as a codeword in a codebook for use in configuring the RIS elements. In this manner, a codebook can be designed without reliance on complex channel state information.

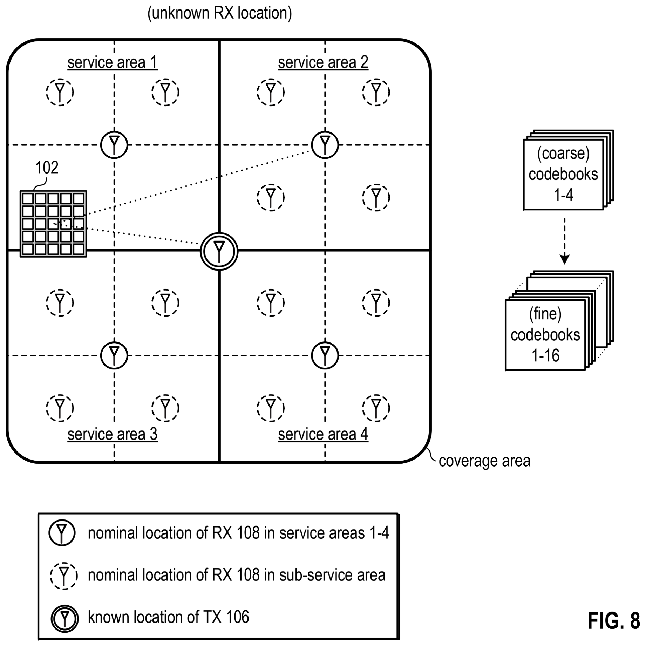

Figure 8 illustrates selection of nominal receiver locations in accordance with embodiments of the present disclosure. In particular, when the location of receiver is not known, one or more nominal receiver locations can be selected and used to determine the second relative location information described above in conjunction with Figure 7. A separate codebook (or codewords of a codebook) can then be generated for each of the nominal receiver locations.

In the illustrated example, a coverage area for a transmitter 106 is segmented into a plurality of service areas 1-4. The size of the coverage area is generally dependent on a frequency range and/or transmission power used by the transmitter 106, and may vary if the transmitter is configured to transmit at multiple frequency ranges. Although illustrated as squares, the coverage area and service areas 1-4 may have other shapes. Further, the coverage area may be segmented into any number of service areas, and the service areas may not be of equal size.

A location within each of the service areas 1-4 is selected as a nominal receiver location for use in determining the second relative location information. In an example, the center of each service area is selected as the nominal receiver location. Each of the nominal receiver locations can be used in a geometry-based method (such as the method of Figure 7) to determine angle of departure information and to generate a respective codebook for a RIS 102. In the illustrated example, (coarse) codebooks 1-4 are generated based on the nominal receiver locations for service areas 1-4.

In a further example, each of the service areas 1-4 is further segmented into four sub-service areas, and a nominal receiver location is selected within each of the sixteen sub-service areas. Continuing with this example, each of the nominal receiver locations can be used to design a respective codebook (e.g., fine codebooks 1-16). The fine codebooks for a sub-service area can then be associated with a corresponding coarse codebook to construct a hierarchical codebook structure. The fine codebooks can be further refined using further, finer/smaller sub-service areas. The hierarchical codebook structure is used for purposes of a codebook selection or sweeping process.

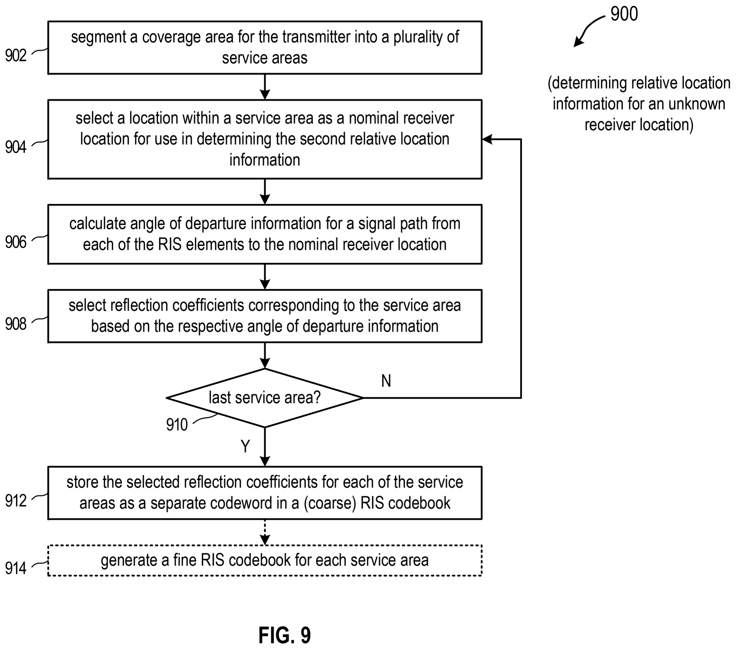

Figure 9 is a logic diagram 900 illustrating coarse codebook design for an unknown receiver location in accordance with an embodiment of the present disclosure. The method begins at step 902, where a coverage area for a transmitter 106 is determined and segmented into a plurality of service areas such as shown in Figure 8. The method continues at step 904 where a nominal receiver location is selected within a service area for use in determining the second relative location information of Figure 7. The method proceeds to step 906 where angle of departure information is calculated for a signal path from each of the RIS elements to the nominal receiver location, and (step 908) reflection coefficients for the service area are selected based on the angle of departure information (e.g., phase shift information can be estimated for each of the RIS elements based on the angle of departure information and previously calculated angle of arrival information). Steps 904-906 are repeated until reflection coefficients have been selected, based on a nominal receiver location, for each of the service areas (as determined at step 910).

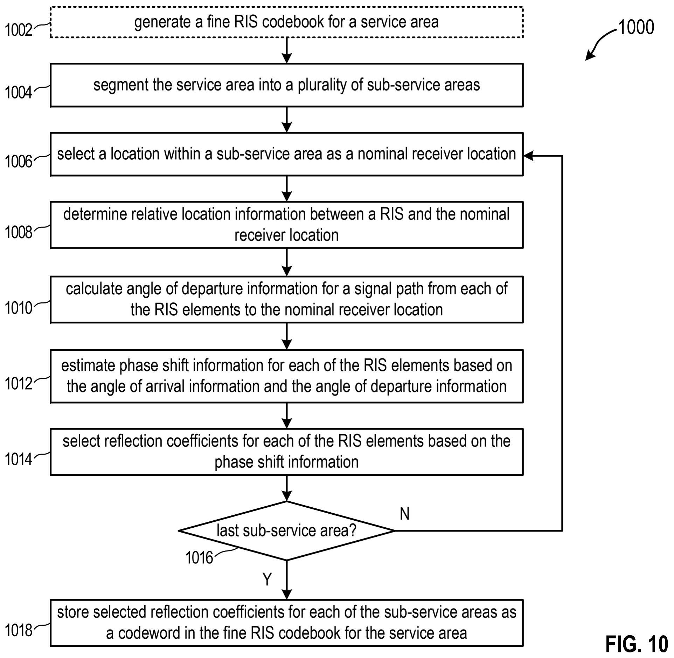

The method continues at step 912, where the selected reflection coefficients for each of the service areas are stored as a separate codeword in a (coarse) RIS codebook. In another example, the selected reflection coefficients for each of the service areas are stored as separate RIS codebooks. The method proceeds to step 914, where a fine codebook(s) are optionally generated for each of the service areas. An example of generating a fine codebook is described below in conjunction with Figure 10.

Figure 10 is a logic diagram 1000 illustrating fine codebook design for an unknown receiver location in accordance with an embodiment of the present disclosure. In this example, a transmitter 106 determines (at step 1002) to generate a fine codebook for a service area of a coverage area of the transmitter.

The method continues at step 1004, where a service area (i.e., a segmented portion of the coverage area) for a transmitter 106 is determined and segmented into a plurality of sub-service areas such as shown in Figure 8. The method continues at step 1006 where a nominal receiver location is selected within a sub-service area (e.g., the center of the sub-service area) for use in determining the second relative location information of Figure 7. The method proceeds to step 1008 where relative location information between a RIS and the nominal receiver is determined. Based on the relative location information, angle of departure information is calculated (at step 1010) for a signal path from each of the RIS elements of the RIS to the nominal receiver location.

The method continues at step 1012, where phase shift information is estimated for each of the RIS elements based on the angle of departure information and angle of arrival information for a signal path from the transmitter to each of the RIS elements (such as calculated at step 704 of Figure 7). The method proceeds to step 1014 where reflection coefficients are selected for each of the RIS elements are calculated based on the phase shift information. Steps 1006-1014 are repeated until reflection coefficients have been selected, based on a nominal receiver location, for each of the sub-service areas (as determined at step 1016).

The method continues at step 1018, where the selected reflection coefficients for each of the sub-service areas are stored as a separate codeword in a fine RIS codebook. The fine RIS codebooks can be associated with a coarse codebook for a coverage area that includes the service area.

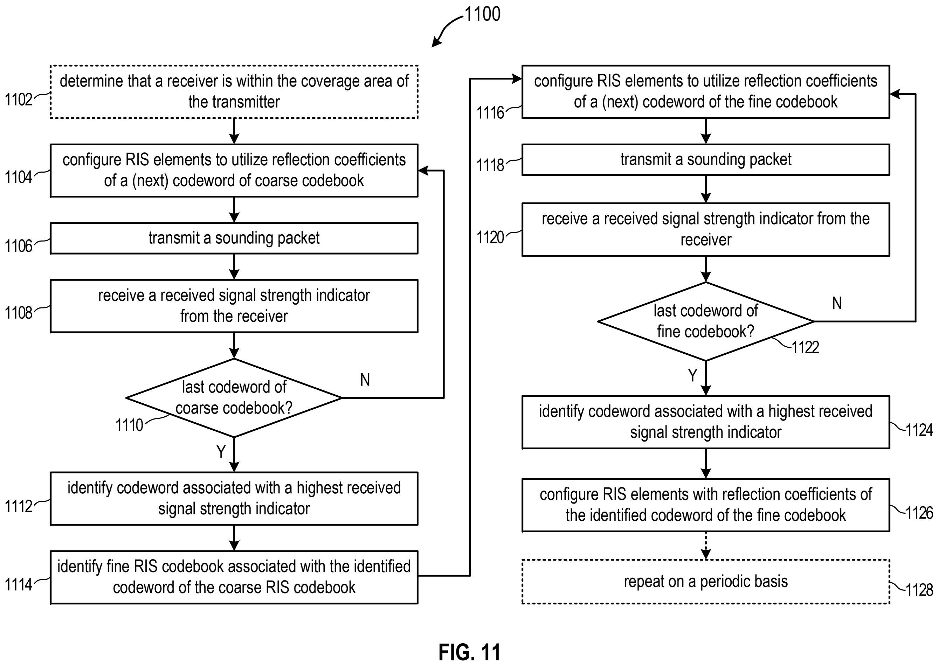

Figure 11 is a logic diagram 1100 illustrating selection of an optimal codeword of a codebook through use of receiver feedback in accordance with an embodiment of the present disclosure. The illustrated method includes a sounding/codebook sweeping procedure performed by a transmitter 106 to identify an optimal RIS codebook/codeword (e.g., an optimal RIS steered beam) for use in communicating with a receiver 108. The coarse codebook and fine codebook used in this method can be designed using a geometry-based method(s) as described above.

The method begins at step 1102 where the transmitter determines that a receiver is within its coverage area (e.g., through received acknowledgement messaging or other detectable signaling from the receiver). The method continues at step 1104 where the transmitter configures RIS elements to utilize reflection coefficients from a codeword of a coarse codebook, such as a coarse codebook generated using the method described in conjunction with Figure 9. The method proceeds to step 1106, where the transmitter transmits a sounding packet (e.g., a steered or unsteered Wi-Fi Null Data Packet (NDP)).

The method continues at step 1108 where the transmitter receives a received signal strength indicator from the receiver in response to the sounding packet. For example, the transmitter may receive a received signal strength indicator (RSSI) for an 802.11 implementation or a received channel quality indicator (CQI) for a cellular implementation. Steps 1104-1108 are repeated for each codeword of the coarse codebook as determined at step 1110.

The method proceeds to step 1112, where the transmitter identifies a codeword of the coarse codebook associated with a highest received signal strength indicator. The method continues at step 1114, where the transmitter identifies a fine codebook (e.g., a codebook for a sub-service area) associated with the identified codebook. The transmitter then configures the RIS elements to utilize reflection coefficients from a codeword of the fine codebook. The method proceeds to step 1118, where the transmitter transmits a sounding packet, and continues at step 1120 where the transmitter receives a received signal strength indicator from the receiver in response to the sounding packet. Steps 1116-1120 are repeated for each codeword of the fine codebook as determined at step 1122. In another example, the transmitter 106 may not perform a sounding procedure using all of the coarse/fine codebook values if, prior to completing the sounding procedure, the transmitter receives an RSSI indicating a received signal strength above a predetermined threshold.

The method proceeds to step 1124, where the transmitter identifies a codeword of the fine codebook associated with a highest received signal strength indicator. The method continues at step 1126, where the transmitter configures (e.g., via RFID control signaling) the RIS elements with the reflection coefficients of the identified codeword of the fine codebook. As shown at step 1128, the codebook sweeping procedure of the illustrated method can be repeated on a periodic basis in order to maintain an optimal RIS beam steering configuration (e.g., to account for changing environmental conditions or movements of the receiver within the coverage area).

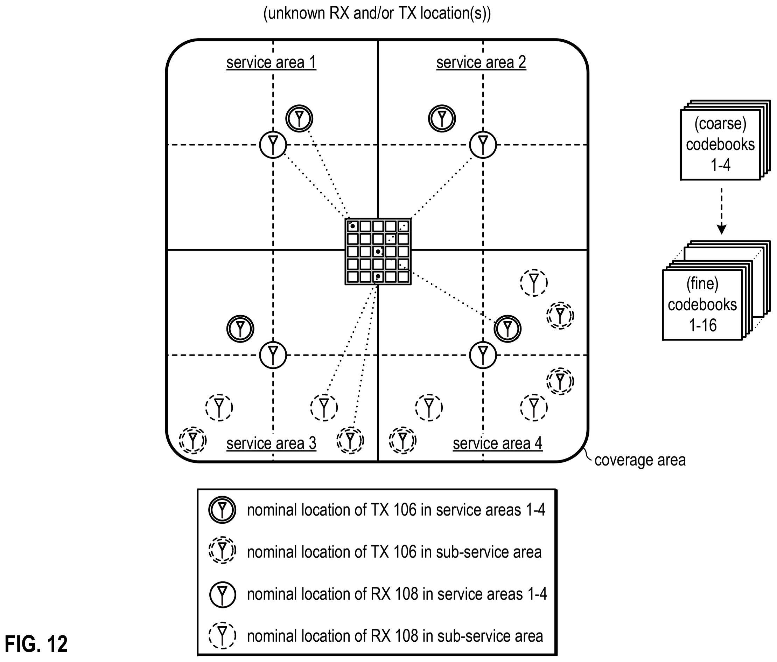

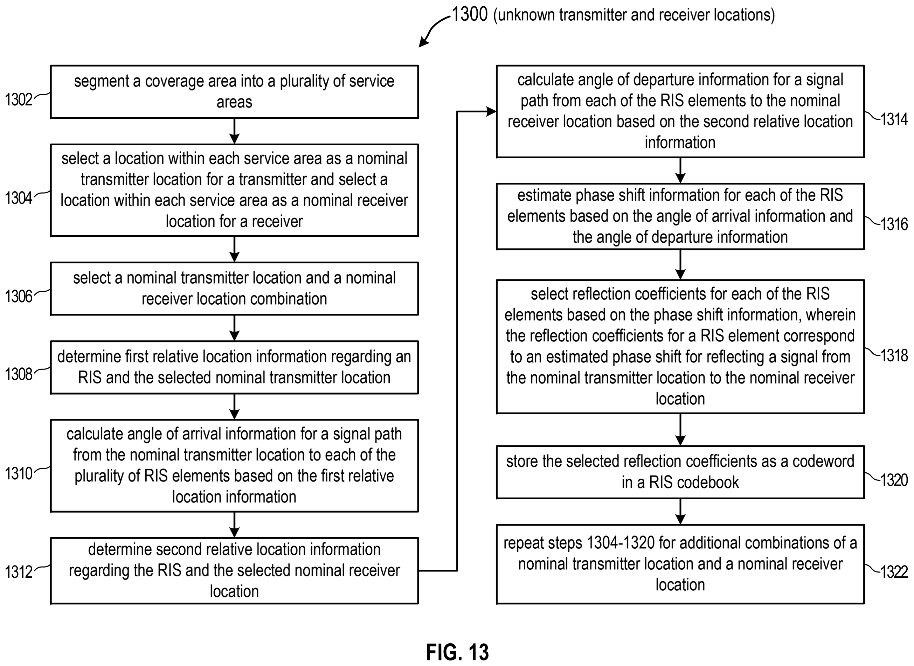

Figure 12 illustrates selection of nominal transmitter and nominal receiver locations in accordance with an embodiment of the present disclosure. In particular, when the actual locations of the transmitter and receiver are not known, one or more nominal transmitter locations and one or more nominal receiver locations can be selected and used to determine the first and second relative location information described below in conjunction with Figure 13. Both coarse and fine codebooks can be generated for various combinations of a nominal transmitter location and a nominal receiver location. In the illustrated diagram, the known location of a RIS is used as point of reference for determining relative location information.

In the illustrated example, a coverage area for the RIS (or, alternatively, for nominal transmitter location) is segmented into a plurality of service areas 1-4. Although illustrated as squares, the coverage area and service areas 1-4 may have other shapes. Further, the coverage area may be segmented into any number of service areas of equal or unequal size.

In this example, a location within each of the service areas 1-4 is selected as a nominal transmitter location and a nominal receiver location for use in determining first and second relative location information with respect to the RIS. In an example, the center of each service area is selected as the nominal transmitter location and nominal receiver location. Each of the nominal transmitter and receiver locations can be used in a geometry-based method (such as the method of Figure 13) to determine angle of arrival information and angle of departure information. In the illustrated example, coarse codebooks 1-4 are generated based on various combinations of the nominal transmitter and receiver locations for service areas 1-4.

In a further example, each of the service areas 1-4 is further segmented into four sub-service areas, and a nominal transmitter location and nominal receiver location is selected within each of the sixteen sub-areas. Continuing with this example, various combinations of nominal transmitter locations and the nominal receiver locations in the sub-service areas can be used to design fine codebooks (e.g., fine codebooks 1-16). The fine codebooks can then be associated with coarse codebooks, e.g., for purposes of a codebook selection process.

Figure 13 is a logic diagram 1300 illustrating codebook design for unknown transmitter and receiver locations in accordance with an embodiment of the present disclosure. The method may be performed, for example, by a transmitter 106 having an indeterminate location with respect to a RIS that is identified within its coverage area. The method begins at step 1302, where a coverage area (e.g., a coverage area for RIS or nominal transmitter location) is determined and segmented into a plurality of service areas such as illustrated in Figure 12. The method continues at step 1304 where a nominal transmitter location and a nominal receiver location are selected within each of the service area. The method proceeds to step 1306 where a combination of a nominal transmitter location and a nominal receiver location is selected. In this example, the nominal transmitter and receiver locations may be in the same service area or in different service areas.

The method continues at step 1308 where the transmitter determines first relative location information regarding RIS elements of the RIS and the selected nominal transmitter location. Determining relative location information includes using geometrical information, such as relative azimuth, elevation and rotation information as described above with reference to Figure 6 and Figure 7. The method continues at step 1310, where angle of arrival information for a signal path from the nominal transmitter location to each of the RIS elements is calculated based on the first relative location information.

The method proceeds to step 1312, where the transmitter determines second relative location information regarding the selected nominal receiver location and the RIS elements. The method continues at step 1314 where angle of departure information for a signal path from each of the RIS elements to the nominal receiver location to is calculated based on the second relative location information. The method then proceeds to step 1316 where phase shift information for each of the RIS elements is estimated based on the angle of arrival information and the angle of departure information. The estimated phase shift information is used to select (step 1318) reflection coefficients for each of the RIS elements, where the reflection coefficients for a RIS element correspond to an estimated phase shift for reflecting a signal from the nominal transmitter location to the nominal receiver location. The selected reflection coefficients are stored as a codeword in a RIS codebook at step 1320. Steps 1304-1320 can then be repeated (step 1322) for additional combinations of a nominal transmitter location and a nominal receiver location (e.g., until a desired number of codewords have been generated).

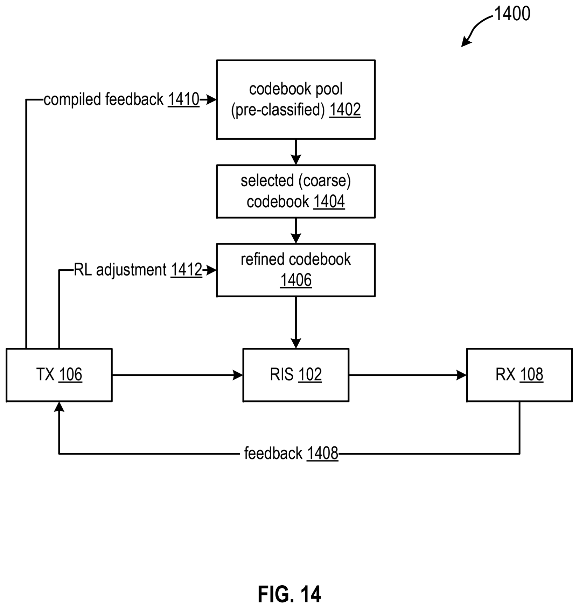

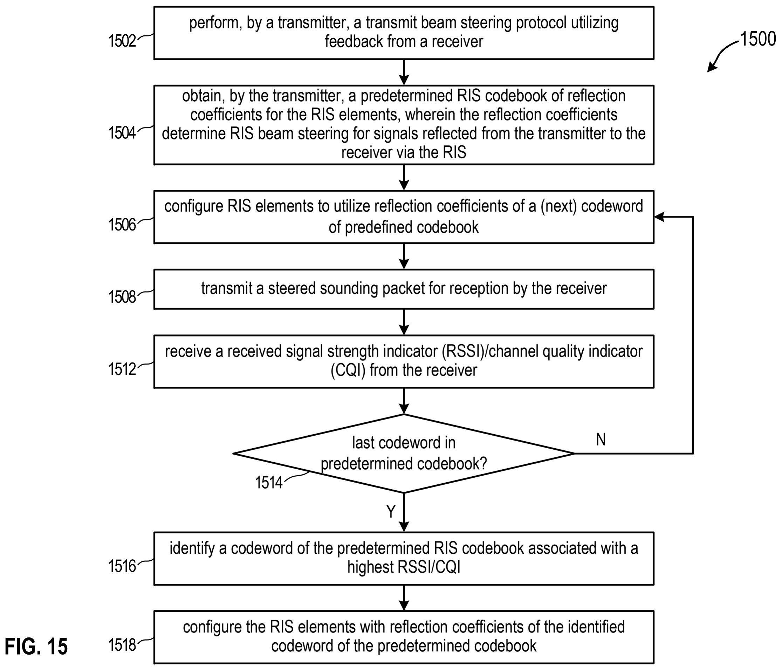

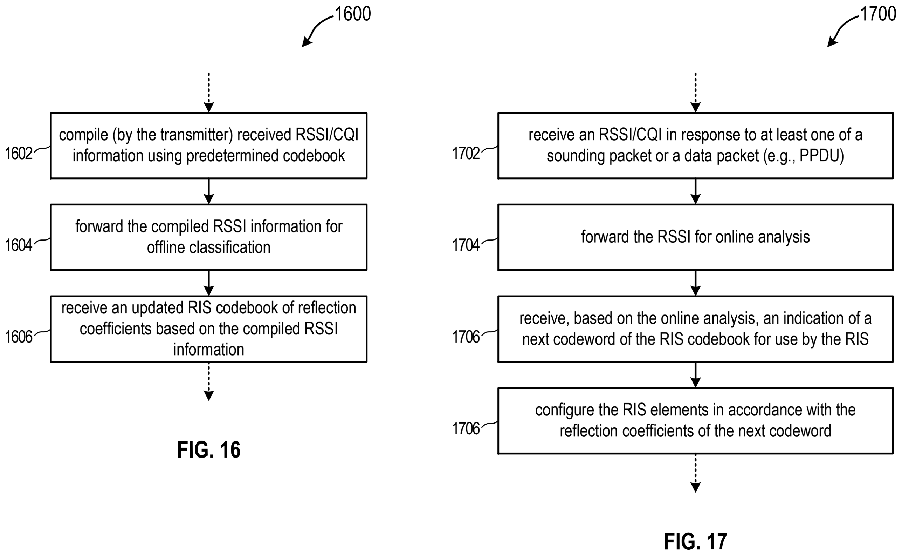

Figure 14 illustrates a flow diagram 1400 for refining a predetermined codebook in accordance with embodiments of the present disclosure. In particular, a data driven machine learning based solution is illustrated for refining a RIS codebook ("codebook") that includes predetermined reflection coefficients for a RIS. In various aspects, the illustrated solution can be performed by a transmitter or a transmitter operating in conjunction with a remote or local computing device or module, a control node, a cloud computing device, etc. In an example, the transmitter performs a (steered or unsteered) sounding-based approach to refine the predetermined or pre-classified codebook. An example of a steered sounding-based approach is illustrated in Figure 15. Selection and refinement of a pre-classified codebook may be informed by feedback from the transmitter. Examples of offline and online feedback are described in conjunction with Figures 16 and 17.

Referring more particularly to Figure 14, a codebook pool 1402 of (pre-classified/predetermined) RIS codebooks provides a selected (e.g., coarse) codebook 1404 to a transmitter 106. The codebook 1404 is used by the transmitter 106 to configure RIS elements of a RIS 102 with a set of reflection coefficients/phase responses. In this example, the transmitter 106 communicates with a receiver 108 and collects feedback 1408. Communications with the receiver 108 include a signal path from the RIS 102 to the receiver 108, and may include normal data traffic or a sounding procedure (e.g., an NDP-based procedure). The feedback 1408 may include RSSI or CQI information.

The transmitter 106 provides the feedback as compiled feedback 1410 to the codebook pool 1402, which in turn can classify the feedback and utilize it to provide an updated codebook 1404 or refined codebook 1406. The compiled feedback 1410 may be immediate or delayed. The transmitter 106 of this example further operates to provide immediate feedback (RL adjustment 1412) for application in an online reinforcement learning based process that can adjust, or identify adjustments for, the values of the refined codebook 1406 used to configure the RIS 102, with a goal of improving the performance of the RIS 102.

Figure 15 is a logic diagram 1500 illustrating a method for selection of an optimal codeword of a predetermined codebook. The method can be performed by a transmitter 106 on a stand-alone basis or, alternatively, in conjunction with an online reinforcement learning based process. The method begins at step 1502 where the transmitter performs a beam steering protocol utilizing feedback (e.g., RSSI or CQI information) to establish a beam steering matrix for steered communications with the receiver. The method continues at step 1504, where the transmitter obtains a predetermined RIS codebook of reflection coefficients. The reflection coefficients of a codebook of the RIS codebook are used to configure the RIS elements of RIS (step 1506) for beam steering signals reflected from the transmitter to the receiver.

The method continues at step 1508, where the transmitter transmits a steered sounding pack for reception by the receiver. In response the transmitter receives (step 1510) an RSSI or CQI (or similar information) from the receiver. Steps 1506-1512 are repeated for each codeword of the predetermined RIS codebook as determined at step 1514. In another example, selection of a next codeword is in positive direction of a quality/score index. The method continues at step 1516 where the transmitter (and/or an online reinforcement learning based process) identifies a codeword of the predetermined RIS codebook with a highest RSSI/CQI score. The method continues at step 1518 where the transmitter configures the RIS elements with the reflection coefficients of the identified codeword of the predetermined codebook.

Figure 16 is a logic diagram 1600 illustrating use of compiled receiver feedback to design a codebook in accordance with an embodiment of the present disclosure. The illustrated method can be performed by a transmitter 106. The method begins at step 1602, where the transmitter compiles received RSSI/CQI information (e.g., from a sounding procedure) and forwards (at step 1604) the compiled RSSI information for offline classification. The method continues at step 1606, where the transmitter receives an updated RIS codebook of reflection coefficients based on the compiled RSSI information.

Figure 17 is a logic diagram 1700 illustrating use of machine learning to select a next codeword of a RIS codebook in accordance with an embodiment of the present disclosure. The method begins at step 1702, where a transmitter receives an RSSI/CQI in response to at least one of a sounding packet or a data packet (e.g., a PPDU). In this example, the sounding packet or data packet is transmitted while a RIS is configured with a codeword of a RIS codebook. The method continues at step 1704, where the transmitter forwards (e.g., immediately) the RSSI for online analysis. In response to the online analysis, the transmitter receives (at step 1706) an indication of a next codeword of the RIS codebook for use by the RIS. The method proceeds to step 1706, where the transmitter configures the RIS elements in accordance with the reflection coefficients of the indicated codeword.

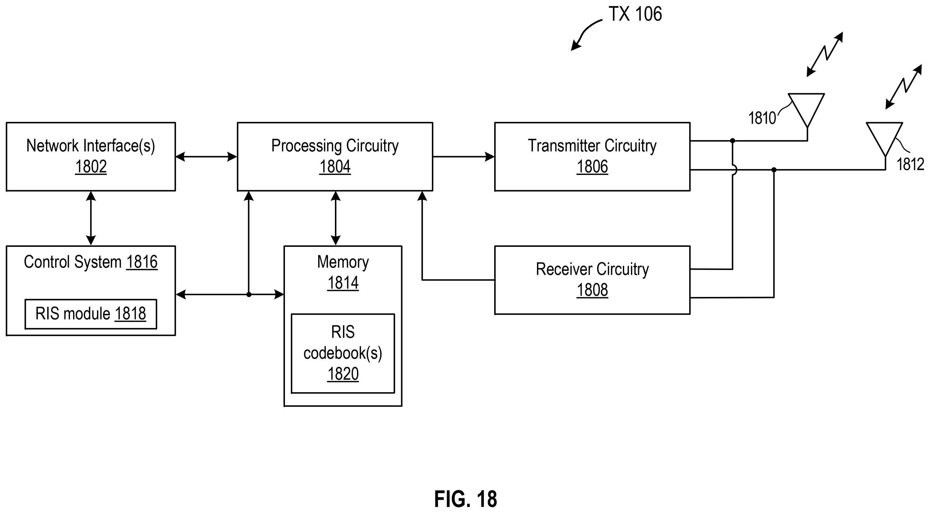

Figure 18 is a schematic block diagram of a wireless transmitter 106 according to an embodiment of the present disclosure. The transmitter 106 may be, for example, a Wi-Fi access point, an eNB or other type of base station, or other device capable of wireless full-duplex operation. The transmitter 106 generally includes one or more network interfaces 1802, processing circuitry 1804, transmitter circuitry 1806, receiver circuitry 1808, a control system 1816, and memory 1814. The processing circuitry 1804 can include, for example, baseband processing circuitry, a training signal generation module, a frame generation module, a signal mapping module, etc. The memory 1814 may be any type of memory capable of storing software and data (e.g., beam steering matrices). In the illustrated example, the memory 1814 may store one or more RIS codebooks 1820. The control system 1816 of this example includes a RIS module 1818 configured to implement and/or facilitate one or more of the various methodologies described above.

The transmitter 106 of the illustrated embodiment further includes a plurality of antennas 1810 and 1812 configurable for use with the transmitter circuitry 1806 and the receiver circuitry 1808 (e.g., one or more transmit antennas and one or more receive antennas). In one example, at least one antenna 1810 is configured as a transmit antenna and at least one antenna 1812 is configured as a receive antenna. The transmitter 106 may optionally utilize one or more remotely located transmit and/or receive antennas.

The receiver circuitry 1808 operates to receive radio frequency signals bearing information from one or more other wireless devices (e.g., a receiver 108). A low noise amplifier and a filter (not separately illustrated) may cooperate to amplify and remove broadband interference from received signals for processing. Down-conversion and digitization circuitry (not separately illustrated) can then down convert the filtered, received signals to intermediate or baseband frequency signals, which are then digitized into one or more digital streams.

The processing circuitry 1804 processes the digitized received signals to extract information or data bits conveyed in the received signals. This processing typically includes demodulation, decoding, and error correction operations. Accordingly, the processing circuitry 1804 is generally implemented in one or more DSPs or application-specific integrated circuits (ASICs). The received information may then be sent to an associated network via the network interface(s) 1802, transmitted to another device or terminal serviced by the transmitter 106, or used in performing RIS-related operations.

On the transmit side, the processing circuitry 1804 receives digitized data, which may represent training signals, voice, data, or control information, from the network interface(s) 1802, and encodes the data for transmission. The encoded data is output to the transmitter circuitry 1806, where it is modulated by a carrier signal having a desired transmit frequency or frequencies. A power amplifier (not separately illustrated) will amplify the modulated carrier signal to a level appropriate for transmission, and deliver the modulated carrier signal to the antennas 1810/1812 through a matching network (not separately illustrated). The transmitter 106 may concurrently transmit and receive signals using multiple antennas 1810/1812.

Accordingly, device architectures and methods illustrated in the drawings and described herein reduce the need for accurate/statistical channel state information in the codebook design and beam steering protocol for a RIS. In an illustrative, non-limiting embodiment, a method for generating a codebook for a reconfigurable intelligent surface (RIS) having a plurality of reflective elements (RIS elements) is provided. The method includes determining first relative location information regarding a wireless transmitter and the RIS. The method further includes calculating, based on the first relative location information, angle of arrival information for a signal path from the wireless transmitter to each of the RIS elements. The method further includes determining second relative location information regarding a wireless receiver and the RIS and calculating, based on the second relative location information, angle of departure information for a signal path from each of the RIS elements to the wireless receiver. The method further includes estimating phase shift information for each of the RIS elements based on the angle of arrival information and the angle of departure information, and selecting reflection coefficients for each of the RIS elements based on the estimated phase shift information, wherein the reflection coefficients for a RIS element correspond to an estimated phase shift for reflecting a signal from the nominal transmitter location to the nominal receiver location as part of a coherent reflected beam. The selected reflection coefficients are stored as a codeword in a RIS codebook for use in configuring the RIS elements.

The method of this embodiment includes optional aspects. With one optional aspect, the first relative location information comprises azimuth, elevation, and rotation information regarding the wireless transmitter and the RIS elements. With another optional aspect, determining the first relative location information includes determining an existing location of the wireless transmitter, and determining the second relative location information includes determining an existing location of the wireless receiver. In still another optional aspect, determining the first relative location information and determining the second relative location information includes performing, by the wireless transmitter, a range-based localization procedure. In yet another optional aspect, the RIS elements are configurable to reflect incident signals transmitted in accordance with one or more IEEE 802.11 standards.

With another optional aspect, determining the second relative location information includes segmenting a coverage area for the wireless transmitter into a plurality of service areas and selecting a location within a service area of the plurality of service areas as a nominal receiver location of the wireless receiver for determining the second relative location information. In still another optional aspect, the method includes segmenting a coverage area for a wireless transmitter into a plurality of service areas and selecting a location within each of the plurality of service areas as a nominal receiver location of the wireless receiver for calculating respective angle of departure information, wherein selecting reflection coefficients for each of the RIS elements further includes selecting reflection coefficients corresponding to each of the plurality of service areas based on the respective angle of departure information, and wherein storing the selected reflection coefficients as a codeword in the RIS codebook includes storing a separate codeword in the RIS codebook for each service area of the plurality of service areas. This aspect may further include selecting a location within each of the plurality of service areas as a nominal receiver location comprises selecting the center of the service area.

In another optional aspect, the RIS codebook is a coarse RIS codebook and the method further includes generating a fine RIS codebook associated with each service area of a plurality of service areas, wherein generating a fine RIS codebook includes segmenting the service area into a plurality of sub-service areas and, for each sub-service area: selecting a location within the sub-service area as a nominal receiver location of the wireless receiver; determining relative location information between the RIS and the nominal receiver location; calculating, based on the relative location information, angle of departure information for a signal path from each of the RIS elements to the nominal receiver location; estimating phase shift information for each of the RIS elements based on the angle of arrival information and the angle of departure information; selecting reflection coefficients for each of the RIS elements based on the estimated phase shift information; and storing the selected reflection coefficients as a codeword in the fine RIS codebook associated with the service area.

The previous optional aspect may further include determining that a wireless receiver is within the coverage area and performing, by a wireless transmitter, a codebook sweeping procedure for the coarse RIS codebook, the codebook sweeping procedure including: transmitting a sequence of sounding packets for reception by the wireless receiver; controlling the configuration of the RIS elements to utilize the reflection coefficients of a different codeword of the coarse RIS codebook during transmission of each sounding packet of the sequence of sounding packets; receiving, in response to the sequence of sounding packets, received signal strength indicator information; and identifying a codeword of the coarse RIS codebook associated with a highest received signal strength indicator. This optional aspect may further include performing, by the wireless transmitter, a codebook sweeping procedure for the fine RIS codebook associated with the identified codeword of the coarse RIS codebook, the procedure including: transmitting a sequence of sounding packets for reception by the wireless receiver; controlling the configuration of the RIS elements to utilize the reflection coefficients of different codewords of the fine RIS codebook during transmission of the sequence of sounding packets; receiving, in response to the sequence of sounding packets, received signal strength indicator information from the wireless receiver; identifying a codeword of the fine RIS codebook associated with a highest received signal strength indicator; and facilitating configuration of the RIS elements in accordance with the reflection coefficients of the identified codeword of the fine RIS codebook.

With another embodiment, a device including at least one interface, a memory that stores operational instructions, and a processing module operably coupled to the memory is provided. The processing module is configured to execute the operational instructions to determine first relative location information regarding a wireless transmitter and a reconfigurable intelligent surface (RIS) having a plurality of reflective elements (RIS elements) and calculate, based on the first relative location information, angle of arrival information for a signal path from the wireless transmitter to each of the RIS elements. The processing module is further configured to determine second relative location information regarding a wireless receiver and the RIS and calculate, based on the second relative location information, angle of departure information for a signal path from each of the RIS elements to the wireless receiver. The processing module is further configured to estimate phase shift information for each of the RIS elements based on the angle of arrival information and the angle of departure information, select reflection coefficients for each of the RIS elements based on the estimated phase shift information, wherein the reflection coefficients for a RIS element correspond to an estimated phase shift for reflecting a signal from the nominal transmitter location to the nominal receiver location as part of a coherent reflected beam, and store the selected reflection coefficients as a codeword in a RIS codebook for use in configuring the RIS elements.

This device of this embodiment includes optional aspects. With one optional aspect, determining the first relative location information includes determining an existing location of the wireless transmitter, and determining the second relative location information includes determining an existing location of the wireless receiver. With another optional aspect, determining the second relative location information includes segmenting a coverage area for the wireless transmitter into a plurality of service areas and selecting a location within a service area of the plurality of service areas as a nominal receiver location of the wireless receiver for determining the second relative location information.

In another optional aspect, the processing module is further configured to execute the operational instructions to segment coverage area for a wireless transmitter into a plurality of service areas and select a location within each of the plurality of service areas as a nominal receiver location of the wireless receiver for calculating respective angle of departure information, wherein selecting reflection coefficients for each of the RIS elements further includes selecting reflection coefficients corresponding to each of the plurality of service areas based on the respective angle of departure information, and wherein storing the selected reflection coefficients as a codeword in the RIS codebook includes storing a separate codeword in the RIS codebook for each service area of the plurality of service areas. In yet another optional aspect, the processing module is further configured to execute the operational instructions to determine that a wireless receiver is within the coverage area, and perform, via the at least one interface, a codebook sweeping procedure for the RIS codebook. In this optional aspect, the codebook sweeping procedure includes transmitting a sequence of sounding packets for reception by the wireless receiver, controlling the configuration of the RIS elements to utilize the reflection coefficients of a different codeword of the RIS codebook during transmission of each sounding packet of the sequence of sounding packets, receiving, in response to the sequence of sounding packets, received signal strength indicator information, and identifying a codeword of the RIS codebook associated with a highest received signal strength indicator.

With another embodiment, a method for generating a RIS codebook for a RIS having a plurality of RIS elements includes segmenting a coverage area into a plurality of service areas and selecting a location within each service area of the plurality of service areas as a nominal transmitter location of a wireless transmitter and a nominal receiver location of a wireless receiver. The method further includes determining, for each of a plurality of combinations of nominal transmitter locations and nominal receiver locations, a codeword of the RIS codebook. In this embodiment, determining a codeword includes selecting a nominal transmitter location and a nominal receiver location, determining first relative location information regarding the RIS and the selected nominal transmitter location, calculating, based on the first relative location information, angle of arrival information for a signal path from the nominal transmitter location to each of the RIS elements, determining second relative location information regarding the RIS and the selected nominal receiver location. The method further includes calculating, based on the second relative location information, angle of departure information for a signal path from each of the RIS elements to the nominal receiver location and estimating phase shift information for each of the RIS elements based on the angle of arrival information and the angle of departure information. The method further includes selecting reflection coefficients for each of the RIS elements based on the estimated phase shift information, wherein the reflection coefficients for a RIS element correspond to an estimated phase shift for reflecting a signal from the nominal transmitter location to the nominal receiver location as part of a coherent reflected beam. The selected reflection coefficients are stored as a codeword in a RIS codebook.

This embodiment includes optional aspects. With one optional aspect, the first relative location information and the second relative location information comprise spherical polar coordinates. In another optional aspect, the method further includes determining that a wireless receiver is within the coverage area and performing, by the wireless transmitter, a codebook sweeping procedure for the RIS codebook. The codebook sweeping procedure includes transmitting a sequence of sounding packets for reception by the wireless receiver, controlling the configuration of the RIS elements to utilize the reflection coefficients of different codewords of the RIS codebook during transmission of the sequence of sounding packets, receiving, in response to the sequence of sounding packets, received signal strength indicator information from the wireless receiver, identifying a codeword of the RIS codebook associated with a highest received signal strength indicator, and facilitating configuration of the RIS elements in accordance with the reflection coefficients of the identified codeword of the RIS codebook.

In another optional aspect, the RIS elements are configurable to reflect incident signals transmitted in accordance with one or more IEEE 802.11 standards. In a further optional aspect, the wireless transmitter comprises a first cellular transceiver and the wireless receiver comprises a second cellular transceiver.

In yet another illustrative, non-limiting embodiment, a non-transitory computer readable storage medium is provided. The non-transitory computer readable storage medium includes at least one memory section that stores operational instructions that, when executed by one or more processing modules of a wireless transmitter, causes the wireless transmitter to perform a transmit beam steering protocol utilizing feedback from a wireless receiver. The operational instructions further cause the wireless transmitter to obtain, for a reconfigurable intelligent surface (RIS) having a plurality of reflective elements (RIS elements), a predetermined RIS codebook of reflection coefficients for the RIS elements, wherein the reflection coefficients determine RIS beam steering for signals reflected from the wireless transmitter to the wireless receiver via the RIS, and perform a codebook sweeping procedure for the predetermined RIS codebook. The codebook sweeping procedure includes transmitting a sequence of steered sounding packets for reception by the wireless receiver, controlling the configuration of the RIS elements to utilize the reflection coefficients of different codewords of the predetermined RIS codebook during transmission of the sequence of sounding packets, receiving, in response to the sequence of sounding packets, received signal strength indicator (RSSI) information from the wireless receiver, identifying a codeword of the predetermined RIS codebook associated with a highest RSS, and facilitating configuration of the RIS elements in accordance with the reflection coefficients of the identified codeword of the predetermined RIS codebook.

The non-transitory computer readable storage medium of this embodiment includes optional aspects. With one optional aspect, the sounding packets comprise null data sounding packets (NDPs). With another optional aspect, the operational instructions further cause the wireless transmitter to compile the RSSI information, forward the compiled RSSI information for offline classification, and receive an updated RIS codebook of reflection coefficients based on the compiled RSSI information. With yet another optional aspect, the operational instructions further cause the wireless transmitter to receive an RSSI in response to at least one of a sounding packet or a physical layer protocol data unit (PPDU) packet, forward the RSSI for online analysis, receive, based on the online analysis, an indication of a next codeword of the RIS codebook for use by the RIS, and facilitate configuration of the RIS elements in accordance with the reflection coefficients of the next codeword.

As may be used herein, the term(s) "configured to", "operably coupled to", "coupled to", and/or "coupling" includes direct coupling between items and/or indirect coupling between items via an intervening item (e.g., an item includes, but is not limited to, a component, an element, a circuit, and/or a module) where, for an example of indirect coupling, the intervening item does not modify the information of a signal but may adjust its current level, voltage level, and/or power level. As may further be used herein, inferred coupling (i.e., where one element is coupled to another element by inference) includes direct and indirect coupling between two items in the same manner as "coupled to".

As may further be used herein, the term(s) "configured to", "operable to", "coupled to", or "operably coupled to" indicates that an item includes one or more of power connections, input(s), output(s), etc., to perform, when activated, one or more its corresponding functions and may further include inferred coupling to one or more other items. As may still further be used herein, the term "associated with", includes direct and/or indirect coupling of separate items and/or one item being embedded within another item.

As may be used herein, one or more claims may include, in a specific form of this generic form, the phrase "at least one of a, b, and c" or of this generic form "at least one of a, b, or c", with more or less elements than "a", "b", and "c". In either phrasing, the phrases are to be interpreted identically. In particular, "at least one of a, b, and c" is equivalent to "at least one of a, b, or c" and shall mean a, b, and/or c. As an example, it means: "a" only, "b" only, "c" only, "a" and "b", "a" and "c", "b" and "c", and/or "a", "b", and "c".

As may also be used herein, the terms "processor", "processing circuitry", "processing circuit", "processing module", and/or "processing unit" may be a single processing device or a plurality of processing devices. Such a processing device may be a microprocessor, microcontroller, digital signal processor, microcomputer, central processing unit, field programmable gate array, programmable logic device, state machine, logic circuitry, analog circuitry, digital circuitry, and/or any device that manipulates signals (analog and/or digital) based on hard coding of the circuitry and/or operational instructions. Further, such a processing device may include a plurality of processing cores or processing domains, which may operate on separate power domains. The processor, processing circuitry, processing circuit, processing module, and/or processing unit may be or may further include memory and/or an integrated memory element, which may be a single memory device, a plurality of memory devices, and/or embedded circuitry of another processor, processing circuitry, processing circuit, processing module, and/or processing unit. Such a memory device may be a read-only memory, random access memory, volatile memory, non-volatile memory, static memory, dynamic memory, flash memory, cache memory, and/or any device that stores digital information. Note that if the processor, processing circuitry, processing circuit, processing module, and/or processing unit includes more than one processing device, the processing devices may be centrally located (e.g., directly coupled together via a wired and/or wireless bus structure) or may be distributedly located (e.g., cloud computing via indirect coupling via a local area network and/or a wide area network). Further note that if the processor, processing circuitry, processing circuit, processing module, and/or processing unit implements one or more of its functions via a state machine, analog circuitry, digital circuitry, and/or logic circuitry, the memory and/or memory element storing the corresponding operational instructions may be embedded within, or external to, the circuitry comprising the state machine, analog circuitry, digital circuitry, and/or logic circuitry. Still further note that, the memory element may store, and the processor, processing circuitry, processing circuit, processing module, and/or processing unit executes, hard coded and/or operational instructions corresponding to at least some of the steps and/or functions illustrated in one or more of the figures. Such a memory device or memory element can be included in an article of manufacture.

One or more embodiments have been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope of the claims.

To the extent used, the logic diagram block boundaries and sequence could have been defined otherwise and still perform the certain significant functionality. Such alternate definitions of both functional building blocks and logic diagram blocks and sequences are thus within the scope of the claims. One of average skill in the art will also recognize that the functional building blocks, and other illustrative blocks, modules and components herein, can be implemented as illustrated or by discrete components, application specific integrated circuits, processors/processing cores executing appropriate software and the like or any combination thereof.

To implement various operations described herein, computer program code (i.e., program instructions for carrying out these operations) may be written in any combination of one or more programming languages, including an object-oriented programming language such as Java, Smalltalk, Python, C++, or the like, conventional procedural programming languages, such as the "C" programming language or similar programming languages, or any of machine learning software. These program instructions may also be stored in a computer readable storage medium that can direct a computer system, other programmable data processing apparatus, controller, or other device to operate in a particular manner, such that the instructions stored in the computer readable medium produce an article of manufacture including instructions which implement the operations specified in the block diagram block or blocks. The program instructions may also be loaded onto a processing core, processing circuitry, computer, other programmable data processing apparatus, controller, or other device to cause a series of operations to be performed on the computer, or other programmable apparatus or devices, to produce a computer implemented process such that the instructions upon execution provide processes for implementing the operations specified in the block diagram block or blocks.

The one or more embodiments are used herein to illustrate one or more aspects, one or more features, one or more concepts, and/or one or more examples. A physical embodiment of an apparatus, an article of manufacture, a machine, and/or of a process may include one or more of the aspects, features, concepts, examples, etc. described with reference to one or more of the embodiments discussed herein. Further, from figure to figure, the embodiments may incorporate the same or similarly named functions, steps, modules, etc. that may use the same or different reference numbers and, as such, the functions, steps, modules, etc. may be the same or similar functions, steps, modules, etc. or different ones.

The term "module" may be used in the description of one or more of the embodiments. A module implements one or more functions via a device such as a processor or other processing device or other hardware that may include or operate in association with a memory that stores operational instructions. A module may operate independently and/or in conjunction with software and/or firmware. As also used herein, a module may contain one or more sub-modules, each of which may be one or more modules.

As may further be used herein, a computer readable memory includes one or more memory elements. A memory element may be a separate memory device, multiple memory devices, or a set of memory locations within a memory device. Such a memory device may be a read-only memory, random access memory, volatile memory, non-volatile memory, static memory, dynamic memory, flash memory, cache memory, a quantum register or other quantum memory and/or any other device that stores data in a non-transitory manner. Furthermore, the memory device may be in a form of a solid-state memory, a hard drive memory or other disk storage, cloud memory, thumb drive, server memory, computing device memory, and/or other non-transitory medium for storing data. The storage of data includes temporary storage (i.e., data is lost when power is removed from the memory element) and/or persistent storage (i.e., data is retained when power is removed from the memory element). As used herein, a transitory medium shall mean one or more of: (a) a wired or wireless medium for the transportation of data as a signal from one computing device to another computing device for temporary storage or persistent storage; (b) a wired or wireless medium for the transportation of data as a signal within a computing device from one element of the computing device to another element of the computing device for temporary storage or persistent storage; (c) a wired or wireless medium for the transportation of data as a signal from one computing device to another computing device for processing the data by the other computing device; and (d) a wired or wireless medium for the transportation of data as a signal within a computing device from one element of the computing device to another element of the computing device for processing the data by the other element of the computing device. As may be used herein, a non-transitory computer readable memory is substantially equivalent to a computer readable memory. A non-transitory computer readable memory can also be referred to as a non-transitory computer readable storage medium.

While particular combinations of various functions and features of the one or more embodiments have been expressly described herein, other combinations of these features and functions are likewise possible. The present disclosure is not limited by the particular examples disclosed herein and expressly incorporates these other combinations.

## Claims

1. A method for generating a codebook for a reconfigurable intelligent surface, RIS, having a plurality of reflective elements, RIS elements, the method comprising:
determining first relative location information regarding a wireless transmitter and the RIS;
calculating, based on the first relative location information, angle of arrival information for a signal path from the wireless transmitter to each of the RIS elements;
determining second relative location information regarding a wireless receiver and the RIS;
calculating, based on the second relative location information, angle of departure information for a signal path from each of the RIS elements to the wireless receiver;
estimating phase shift information for each of the RIS elements based on the angle of arrival information and the angle of departure information;
selecting reflection coefficients for each of the RIS elements based on the estimated phase shift information, wherein the reflection coefficients for a RIS element correspond to an estimated phase shift for reflecting a signal from the nominal transmitter location to the nominal receiver location as part of a coherent reflected beam; and
storing the selected reflection coefficients as a codeword in a RIS codebook for use in configuring the RIS elements.

2. The method of claim 1, wherein the first relative location information comprises azimuth, elevation, and rotation information regarding the wireless transmitter and the RIS elements.

3. The method of claim 1 or 2, wherein determining the first relative location information includes determining an existing location of the wireless transmitter, and wherein determining the second relative location information includes determining an existing location of the wireless receiver.

4. The method of any preceding claim, wherein determining the first relative location information and determining the second relative location information includes performing, by the wireless transmitter, a range-based localization procedure.

5. The method of any preceding claim, wherein determining the second relative location information includes:
segmenting a coverage area for the wireless transmitter into a plurality of service areas; and
selecting a location within a service area of the plurality of service areas as a nominal receiver location of the wireless receiver for determining the second relative location information.

6. The method of any preceding claim, further comprising:
segmenting a coverage area for a wireless transmitter into a plurality of service areas; and
selecting a location within each of the plurality of service areas as a nominal receiver location of the wireless receiver for calculating respective angle of departure information,
wherein selecting reflection coefficients for each of the RIS elements further includes selecting reflection coefficients corresponding to each of the plurality of service areas based on the respective angle of departure information, and
wherein storing the selected reflection coefficients as a codeword in the RIS codebook includes storing a separate codeword in the RIS codebook for each service area of the plurality of service areas.

7. The method of claim 6, wherein the RIS codebook is a coarse RIS codebook, the method further comprising generating a fine RIS codebook associated with each service area of the plurality of service areas, wherein generating a fine RIS codebook includes:
segmenting the service area into a plurality of sub-service areas; and
for each sub-service area:
selecting a location within the sub-service area as a nominal receiver location of the wireless receiver;
determining relative location information between the RIS and the nominal receiver location;
calculating, based on the relative location information, angle of departure information for a signal path from each of the RIS elements to the nominal receiver location;
estimating phase shift information for each of the RIS elements based on the angle of arrival information and the angle of departure information;
selecting reflection coefficients for each of the RIS elements based on the estimated phase shift information; and
storing the selected reflection coefficients as a codeword in the fine RIS codebook associated with the service area.

8. The method of claim 7, further comprising:
determining that a wireless receiver is within the coverage area; and
performing, by the wireless transmitter, a codebook sweeping procedure for the coarse RIS codebook, including:
transmitting a sequence of sounding packets for reception by the wireless receiver;
controlling the configuration of the RIS elements to utilize the reflection coefficients of a different codeword of the coarse RIS codebook during transmission of each sounding packet of the sequence of sounding packets;
receiving, in response to the sequence of sounding packets, received signal strength indicator information; and
identifying a codeword of the coarse RIS codebook associated with a highest received signal strength indicator.

9. The method of claim 8, further comprising:
performing, by the wireless transmitter, a codebook sweeping procedure for the fine RIS codebook associated with the identified codeword of the coarse RIS codebook, including:
transmitting a sequence of sounding packets for reception by the wireless receiver;
controlling the configuration of the RIS elements to utilize the reflection coefficients of different codewords of the fine RIS codebook during transmission of the sequence of sounding packets;
receiving, in response to the sequence of sounding packets, received signal strength indicator information from the wireless receiver;
identifying a codeword of the fine RIS codebook associated with a highest received signal strength indicator; and
facilitating configuration of the RIS elements in accordance with the reflection coefficients of the identified codeword of the fine RIS codebook.

10. The method of any of claims 6 to 9, wherein selecting a location within each of the plurality of service areas as a nominal receiver location comprises selecting the center of the service area.

11. The method of any preceding claim, wherein the RIS elements are configurable to reflect incident signals transmitted in accordance with one or more IEEE 802.11 standards.

12. A device comprising:
at least one interface;
memory that stores operational instructions; and
a processing module operably coupled to the memory, wherein the processing module is configured to execute the operational instructions to:
determine first relative location information regarding a wireless transmitter and a reconfigurable intelligent surface (RIS) having a plurality of reflective elements (RIS elements);
calculate, based on the first relative location information, angle of arrival information for a signal path from the wireless transmitter to each of the RIS elements;
determine second relative location information regarding a wireless receiver and the RIS;
calculate, based on the second relative location information, angle of departure information for a signal path from each of the RIS elements to the wireless receiver;
estimate phase shift information for each of the RIS elements based on the angle of arrival information and the angle of departure information;
select reflection coefficients for each of the RIS elements based on the estimated phase shift information, wherein the reflection coefficients for a RIS element correspond to an estimated phase shift for reflecting a signal from the nominal transmitter location to the nominal receiver location as part of a coherent reflected beam; and
store the selected reflection coefficients as a codeword in a RIS codebook for use in configuring the RIS elements.

13. The device of claim 12, wherein determining the first relative location information includes determining an existing location of the wireless transmitter, and wherein determining the second relative location information includes determining an existing location of the wireless receiver.

14. The device of claim 12 or 13, wherein determining the second relative location information includes:
segmenting a coverage area for the wireless transmitter into a plurality of service areas; and
selecting a location within a service area of the plurality of service areas as a nominal receiver location of the wireless receiver for determining the second relative location information.

15. A non-transitory computer readable storage medium comprising:
at least one memory section that stores operational instructions that, when executed by one or more processing modules of a wireless transmitter, causes the wireless transmitter to:
perform a transmit beam steering protocol utilizing feedback from a wireless receiver;
obtain, for a reconfigurable intelligent surface (RIS) having a plurality of reflective elements (RIS elements), a predetermined RIS codebook of reflection coefficients for the RIS elements, wherein the reflection coefficients determine RIS beam steering for signals reflected from the wireless transmitter to the wireless receiver via the RIS;
perform a codebook sweeping procedure for the predetermined RIS codebook, including:
transmitting a sequence of steered sounding packets for reception by the wireless receiver;
controlling the configuration of the RIS elements to utilize the reflection coefficients of different codewords of the predetermined RIS codebook during transmission of the sequence of sounding packets;
receiving, in response to the sequence of sounding packets, received signal strength indicator (RSSI) information from the wireless receiver;
identifying a codeword of the predetermined RIS codebook associated with a highest RSSI; and
facilitating configuration of the RIS elements in accordance with the reflection coefficients of the identified codeword of the predetermined RIS codebook.
